# FASCICULE DE BREVET EUROPEEN

(11) **EP 1 132 023 B1**
(45) Date de publication et mention de la délivrance du brevet: **18.08.2004**
(21) Numéro de dépôt: 01410022.6
(22) Date de dépôt: 22.02.2001
(51) Int. Cl.: A47B 3/00, F16M 11/00, A47B 43/00

(54) **Dispositif d'assemblage articulé**
Gelenkverbindungsvorrichtung
Articulated assembly device

(30) Priorité: 22.02.2000 FR 0002204
(43) Date de publication de la demande: 12.09.2001
(73) Titulaire: Prados, Ange, 26400 Aouste sur Sye (FR)
(72) Inventeur: Prados, Ange, 26400 Aouste sur Sye (FR)
(74) Mandataire: Hecké, Gérard

(56) Documents cités:
- EP-A- 0 476 729
- DE-A- 3 705 325
- DE-A- 3 943 154
- DE-U- 9 107 227

## Description

### Domaine technique de l'invention

L'invention est relative à un dispositif d'assemblage articulé comprenant une pluralité d'éléments de support reliés par des liaisons d'articulation.

### Etat de la technique

Le document EP-A-694268 décrit un assemblage de panneaux articulés dont chaque organe d'articulation comporte deux axes parallèles reliés rigidement entre eux et espacés l'un de l'autre. Les extrémités des panneaux sont équipées d'une bague élastique ayant une ouverture de largeur inférieure au diamètre des axes d'articulation. L'assemblage des panneaux peut être utilisé pour le montage d'un piétement de table, d'un lit, ou d'un parc. La transformation pour l'obtention de formes variables reste néanmoins limitée.

### Objet de l'invention

L'objet de l'invention consiste à réaliser un dispositif d'assemblage articulé permettant la réalisation d'objets de configurations variables par une simple manipulation, et sans aucun démontage.

Le dispositif d'assemblage selon l'invention est caractérisé en ce que
- six éléments de support sont accouplés les uns aux autres pour constituer un contour fermé déformable, chaque élément de support étant équipé d'une paire de moyens de pivotement s'étendant selon deux directions orthogonales,
- la distance séparant les moyens de pivotement est identique pour les six éléments de support,
- chaque liaison d'articulation entre deux éléments de support adjacents est formée par l'accouplement des moyens de pivotement complémentaires.

Selon un premier mode de réalisation, les éléments de support comportent des biellettes de structures identiques, et comprenant chacune des évidements circulaires disposés à angle droit aux extrémités opposées pour constituer lesdits moyens de pivotement. Un axe d'articulation traverse deux évidements accolés lors de l'accouplement de deux biellettes adjacentes pour constituer l'une des liaisons d'articulation.

Selon un deuxième mode de réalisation, les éléments de support sont formés de panneaux découpés selon des profils prédéterminés. Préférentiellement, les panneaux présentent des surfaces planes triangulaires.

Selon un troisième mode de réalisation, les éléments de support sont constitués par des volumes en forme de polyèdre. Les moyens de pivotement sont formés par une paire de gonds prévus aux extrémités d'une arête du polyèdre, tandis que les moyens de pivotement comportent un gond central sur une arête orthogonale, la longueur du gond central correspondant sensiblement à l'écartement entre les gonds d'extrémités.

Selon une caractéristique de l'invention, un moyen de blocage coopère avec au moins une liaison d'articulation pour assurer le verrouillage du dispositif d'assemblage après la mise en forme des éléments de support.

### Description sommaire des dessins

D'autres avantages et caractéristiques ressortiront plus clairement de la description qui va suivre d'un mode de réalisation de l'invention donné à titre d'exemple non limitatif, et représenté aux dessins annexés, dans lesquels:
- la figure 1 est vue en élévation du dispositif d'assemblage selon l'invention, les éléments de support étant formés par des biellettes;
- la figure 2 est une vue en plan de la figure 1;
- la figure 3 montre une vue en perspective du dispositif d'assemblage de la figure 1 après déplacement de l'un des éléments de support;
- les figures 4 à 7 montrent des vues schématiques en perspective de diverses configurations de tables, les éléments de support étant constitués par des panneaux découpés;
- les figures 8 et 9 sont des vues respectives en élévation et en plan de la table de la figure 5;
- la figure 10 représente une vue en perspective d'une variante de réalisation dont les éléments de support sont constitués par des volumes en forme de polyèdre;
- les figures 11 et 12 sont des vues respectives en élévation et en plan de la structure de la figure 10;
- la figure 13 montre une vue en perspective d'un élément de support de la figure 10;
- la figure 14 montre un système de blocage d'articulation entre deux panneaux adjacents;
- la figure 15 est une vue en coupe verticale de la figure 14;
- la figure 16 représente une vue en coupe d'une liaison d'articulation équipée d'un axe téléscopique servant de pied support pour un piétement;
- la figure 17 est une vue en coupe d'une articulation équipée d'un dispositif de blocage à plaquette de retenue actionnée par un bouton de manoeuvre;
- les figures 18 et 19 montrent des vues partielles à échelles agrandies du dispositif de blocage de la figure 17, respectivement en position verrouillée et en position déverrouillée;
- la figure 20 est une vue en plan de la figure 18, représentant le bouton de manoeuvre;
- la figure 21 montre une articulation entre deux panneaux, associée à un pied démontable ;
- les figures 22 à 24 représentent des vues en perspective d'une lampe d'éclairage dont l'abat-jour est représenté dans diverses positions;
- les figures 25 et 26 montrent des variantes de réalisation du module de la figure 10;
- les figures 27 à 29 représentent l'assemblage par des moyens de liaison de deux modules;
- les figures 30 et 31 représentent l'assemblage de quatre modules;
- la figure 32 montre une vue éclatée d'une paire d'éléments enfichables sur une charnière;
- les figures 33 et 34 montrent un assemblage de six éléments conformes à la figure 32;
- la figure 35 est une variante de la figure 34;
- les figures 36 et 37 sont des variantes du dispositif d'assemblage des figures 1 et 2;
- les figures 38 à 41 montrent le dispositif des figures 36 et 37 après retournement de 90° des liaisons d'articulation des éléments de support.

### Description de modes de réalisations préférentiels

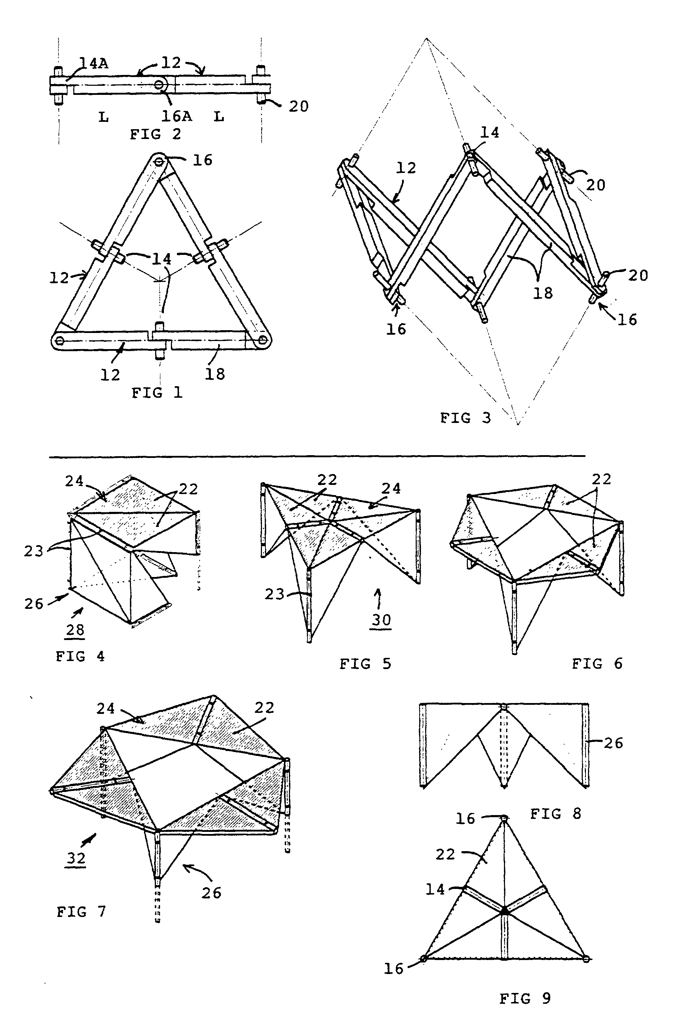

En référence aux figures 1 à 3, un dispositif d'assemblage 10 articulé comporte six éléments de support 12 reliés les uns aux autres par des liaisons d'articulation 14, 16, de manière à former un contour fermé déformable dès que l'un au moins des éléments de support 12 est déplacé d'un mouvement relatif.

Chaque élément de support 12 est équipé d'une paire de moyens de pivotement 14A, 16A disposés orthogonalement l'un par rapport à l'autre, en étant accouplés à deux éléments 12 adjacents pour constituer les liaisons d'articulation 14, 16. Un tel dispositif d'assemblage 10 permet un montage articulé à six axes de pivotement s'étendant selon les côtés d'un parallélépipède déformable.

La distance L entre les moyens de pivotement 14A, 16A des liaisons d'articulation 14, 16 à angle droit de la totalité des éléments de support 12, est identique.

Les éléments de support 12 des figures 1 à 3 comportent des éléments filaires constitués à titre d'exemple par des biellettes 18 ou des profilés rectilignes. Les deux extrémités opposées de chaque biellette 18 comporte deux évidements circulaires disposés à angle droit, et permettant le passage d'un axe d'articulation 20.

Sur les variantes des figures 4 à 9, les éléments de support 12 sont constitués par des panneaux 22 découpés selon des surfaces planes triangulaires. Lorsque l'objet est une table, les liaisons d'articulation 14, 16 jouent le rôle de charnières 23 entre les panneaux 22 articulés du plateau 24 horizontal et du piétement 26.

La figure 4 montre une table 28 à plateau 24 carré, lequel est formé par l'aboutement coplanaire de deux panneaux 22 triangulaires.

Les figures 5, 8 et 9 représentent une table 30 à plateau 24 plein, de section triangulaire formée par la jonction de six panneaux 22 élémentaires de sections triangulaires.

La figure 6 montre une transformation de la table 30 de la figure 5 avec le plateau 24 évidé dans la partie centrale, suite au basculement de 180° des panneaux 22 vers l'extérieur. Le profil extérieur du plateau 24 est dans ce cas hexagonal, et la partie évidée triangulaire correspond à la section du plateau plein de la table de la figure 5.

La forme de la table 32 de la figure 7 est similaire à celle de la table 30 de la figure 6, mais avec des panneaux 22 plus grands. Deux panneaux élémentaires d'une même extension de la table 32 présentent une section triangulaire équilatérale correspondant à la section de la partie évidée centrale.

En fonction de la nature de l'objet, il est clair que les panneaux 22 peuvent avoir un profil quelconque, notamment carré, ou polygonal.

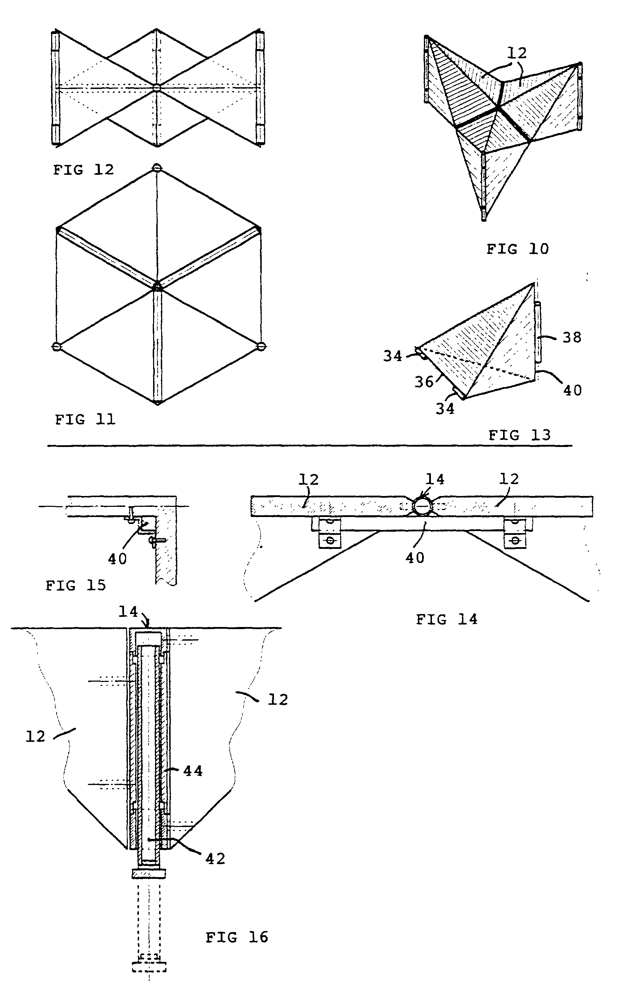

Sur les variantes des figures 10 à 13, les éléments de support 12 sont constitués par des volumes en forme de polyèdre. Les moyens de pivotement 14A sont formés par une paire de gonds 34 prévus aux extrémités d'un arête 36, tandis que les moyens de pivotement 16A comportent un gond 38 central sur une arête orthogonale 40. La longueur du gond 38 central correspond sensiblement à l'écartement entre les gonds 34 d'extrémités.

Un organe de préhension (non représenté) peut être associé au dispositif d'assemblage 10 pour assurer la mise en forme des éléments de support 12 de l'objet.

Sur les figures 14 et 15, un barreau 40 de verrouillage peut être positionné sous les liaisons d'articulation 14 ou 16 pour assurer le blocage en position active. La mise en place du barreau 40 intervient manuellement après le déploiement définitif des éléments de support 12.

La figure 16 montre une liaison d'articulation 14 ou 16 équipée d'un axe téléscopique 42 mobile entre une position de retrait (traits pleins) et une position d'extraction ( en traits pointillés). Dans la position de retrait, l'axe 42 est inséré totalement à l'intérieur d'une douille 44 cylindrique de la liaison d'articulation. Dans la position d'extraction, l'axe 42 fait saillie de la douille 44, et sert avantageusement de pied de rallonge pour le piétement.

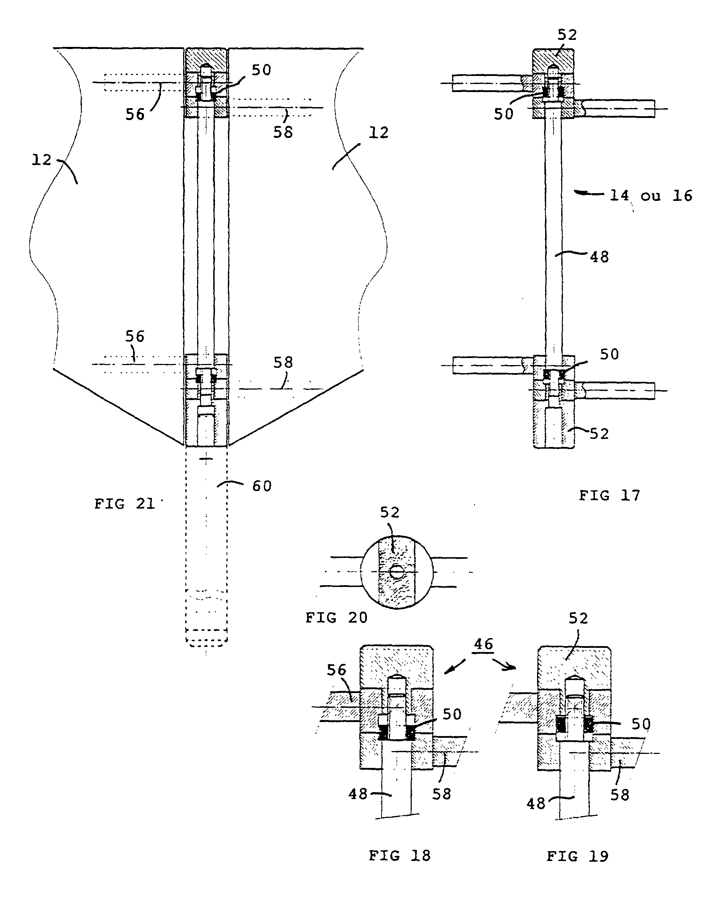

En référence aux figures 17 à 21, un dispositif de blocage 46 d'une liaison d'articulation 14 ou 16 comporte à chaque extrémité de l'axe 48, une plaquette 50 de retenue destinée à être déplacée en translation limitée entre une première position et une deuxième position, respectivement pour le verrouillage et le déverrouillage de la liaison d'articulation 14 ou 16. La manoeuvre de chaque plaquette de retenue 50 s'opère au moyen d'un bouton de commande 52 solidaire de l'axe 48, le passage de la première position vers la deuxième position, et vice-versa étant opéré par un mouvement rotatif de quart de tour dans un sens prédéterminé.

Sur les figures 18 et 20, la plaquette 50 de retenue se trouve dans la première position de verrouillage pour rendre solidaire les deux gonds 56, 58 fixés aux panneaux des deux éléments de support 12.

Sur la figure 19, la rotation du bouton de commande 52 provoque le déplacement en translation de la plaquette 50 vers la deuxième position de déverrouillage qui libère l'accouplement avec le gond 58 inférieur. Les deux éléments de support 12 peuvent pivoter librement dans cette position.

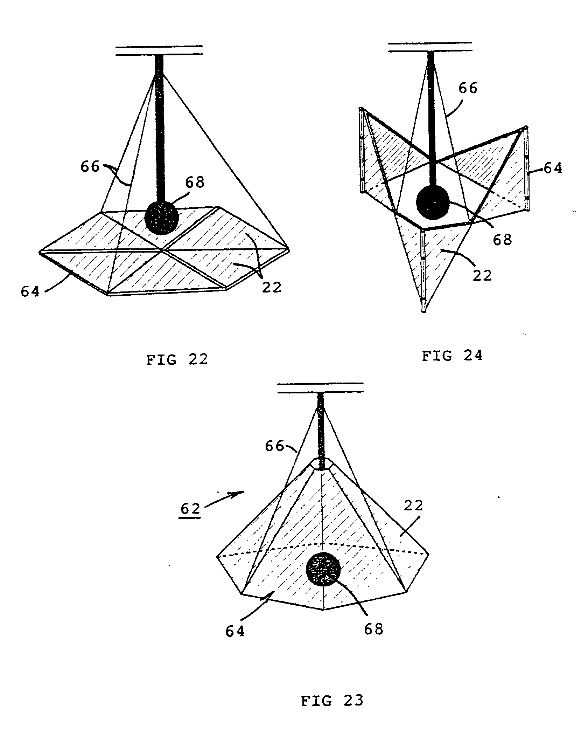

Sur la figure 21, un pied 60 démontable peut être associé à l'extrémité inférieure de l'axe 48 pour autoriser la rehausse du piétement lorsque l'objet est une table.

Le dispositif d'assemblage 10 articulé peut être utilisé pour la fabrication de tout objet, notamment une table ou autre meuble, un abat-jour, un jouet, etc... A une forme articulée de base peuvent être adaptés des panneaux, des figures ou des volumes de tous genres.

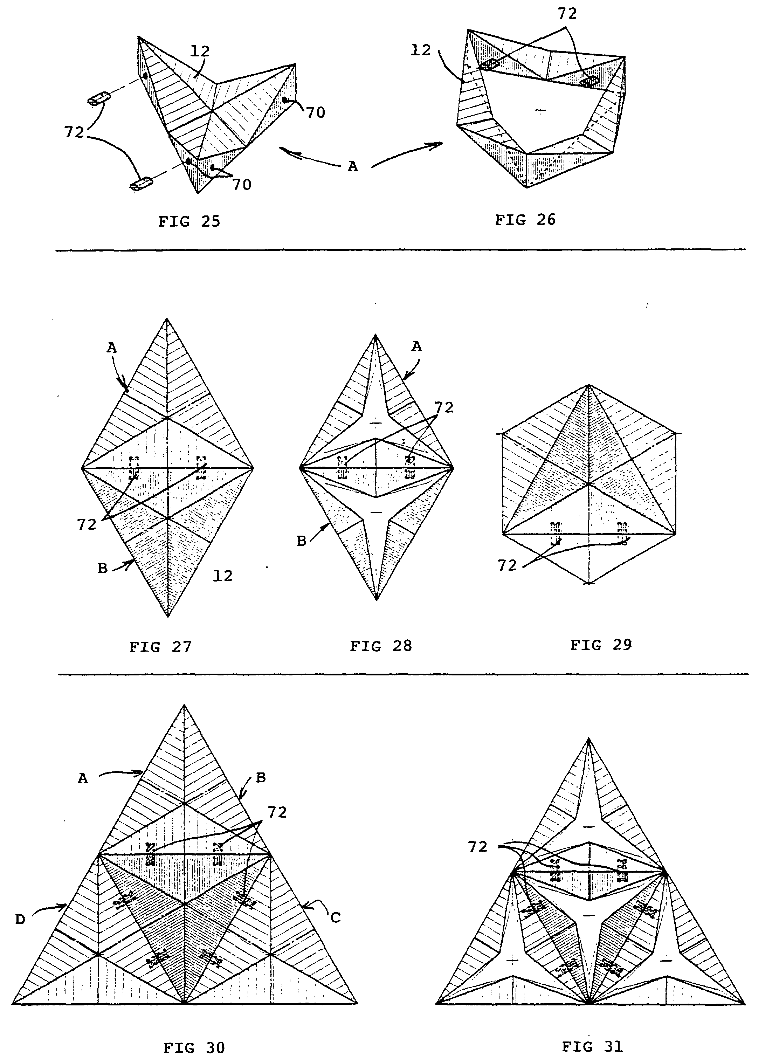

L'application selon les figures 22 à 24 montre une lampe d'éclairage 62 dont l'abat-jour 64 est attaché à un point d'accrochage par des fils 66 de suspension. L'abat-jour est composé de panneaux 22 triangulaires comparables à ceux de la figure 5. Dans la figure 22, l'abat-jour 64 est plat, et sert de réflecteur placé sous l'ampoule 68. Dans les positions des figures 23 et 24, la modification de forme de l'abat-jour 64 intervient suite à la manipulation des panneaux 22 articulés.

Sur les figures 25 à 26, les éléments de support 12 en forme de polyèdre, comportent des orifices 70 destinés à recevoir des moyens de liaison 72 pour l'assemblage d'un module A à un autre module.

Les figures 27 à 29 montrent l'assemblage de deux modules A et B déformables, tandis que les figures 30 et 31 représentent l'assemblage de quatre modules A, B, C et D.

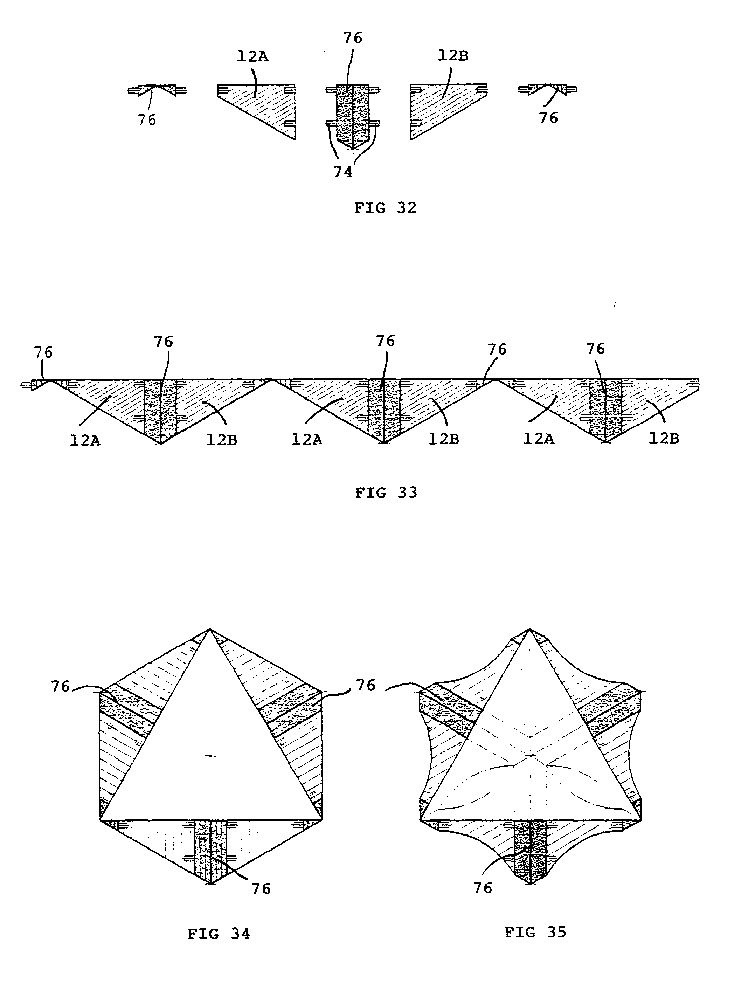

Sur la figure 32, deux éléments de support 12A, 12B sont enfichables sur des tétons 74 solidaires d'une charnière 76 intermédiaire.

Les figures 33 et 34 représentent un module composé de six éléments de support 12A, 12B articulés avec leurs charnières 76 de liaison.

La figure 35 illustre une variante de réalisation avec des parties 12A, 12B de formes différentes à celles illustrées à la figure 34.

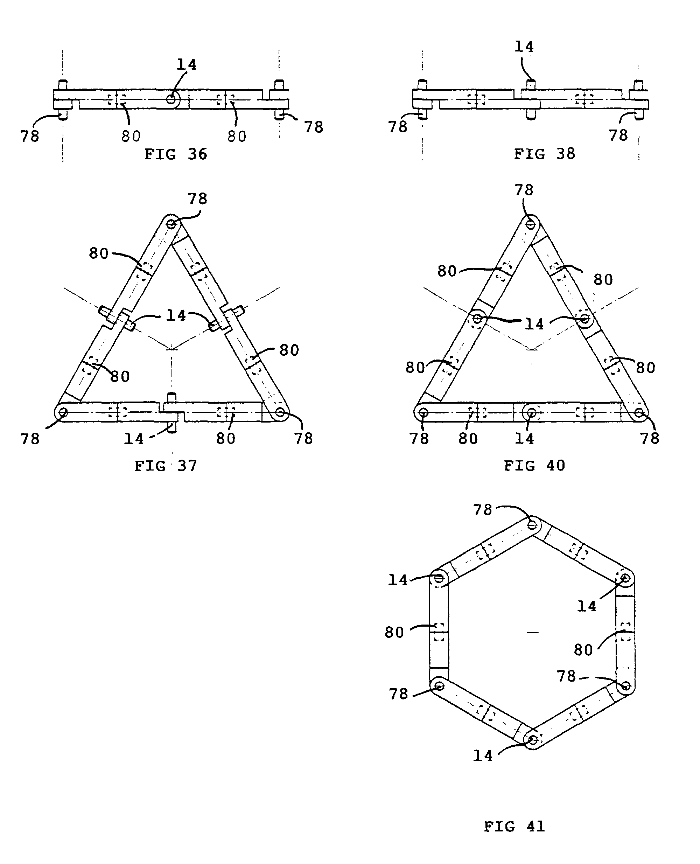

En référence aux figures 36 à 41, les liaisons d'articulation 14 des six éléments de support peuvent être disposées soit orthogonalement comme dans le cas de la figure 1, soit parallèlement par rapport aux autres moyens de pivotement 78 (figures 38 à 41). Ce dernier mode de réalisation (figures 38 à 41), toutefois, n'est pas couvert par les revendications mais est utile à la compréhension de l'invention. Le changement de position peut être obtenu par retournement de 90° au moyen de tétons enfichables 80.

## Revendications

1. Dispositif d'assemblage articulé comprenant une pluralité d'éléments de support (12) reliés par des liaisons d'articulation (14, 16),
**caractérisé en ce que**
- six éléments de support (12) sont accouplés les uns aux autres pour constituer un contour fermé déformable, chaque élément de support (12) étant équipé d'une paire de moyens de pivotement (14A, 14B) s'étendant selon deux directions orthogonales,
- la distance (L) séparant les moyens de pivotement (14A, 14B) est identique pour les six éléments de support (12),
- chaque liaison d'articulation (14, 16) entre deux éléments de support (12) adjacents est formée par l'accouplement des moyens de pivotement (14A, 16A) complémentaires.

2. Dispositif d'assemblage selon la revendication 1, **caractérisé en ce que** les éléments de support (12) comportent des biellettes (18) de structures identiques, et comprenant chacune des évidements circulaires disposés à angle droit aux extrémités opposées pour constituer lesdits moyens de pivotement (14A, 14B).

3. Dispositif d'assemblage selon la revendication 2, **caractérisé en ce qu**'un axe d'articulation (20) traverse deux évidements accolés lors de l'accouplement de deux biellettes (18) adjacentes pour constituer l'une des liaisons d'articulation (14, 16).

4. Dispositif d'assemblage selon la revendication 1, **caractérisé en ce que** les éléments de support (12) sont formés de panneaux (22) découpés selon des profils prédéterminés.

5. Dispositif d'assemblage selon la revendication 4, **caractérisé en ce que** les panneaux (22) présentent des surfaces planes triangulaires.

6. Dispositif d'assemblage selon la revendication 1, **caractérisé en ce que** les éléments de support (12) sont constitués par des volumes en forme de polyèdre.

7. Dispositif d'assemblage selon la revendication 6, **caractérisé en ce que** les moyens de pivotement (14A) sont formés par une paire de gonds (34) prévus aux extrémités d'une arête (36) du polyèdre, tandis que les moyens de pivotement (16A) comportent un gond (38) central sur une arête orthogonale (40), la longueur du gond (38) central correspondant sensiblement à l'écartement entre les gonds (34) d'extrémités.

8. Dispositif d'assemblage selon l'une quelconque des revendications 1 à 7, **caractérisé en ce qu**'un moyen de blocage coopère avec au moins une liaison d'articulation (14, 16) pour assurer le verrouillage du dispositif d'assemblage (10) après la mise en forme des éléments de support (12).

9. Dispositif d'assemblage selon la revendication 8, **caractérisé en ce que** le moyen de blocage comporte un barreau (40) positionné sous la liaison d'articulation (14, 16) entre deux éléments de support (12) adjacents pour assurer ledit verrouillage.

10. Dispositif d'assemblage selon la revendication 6, **caractérisé en ce que** les éléments de support (12) d'un module peuvent être accouplés à un module adjacent par des moyens de liaison (72).

11. Dispositif d'assemblage selon la revendication 6, **caractérisé en ce que** les éléments de support (12A, 12B) en forme de polyèdre sont enfichables sur des tétons (74) de fixation solidaires d'une charnière (76) commune.

## Patentansprüche

1. Gelenkverbindungsvorrichtung mit einer Mehrzahl von Stützelementen (12), die durch Gelenkverbindungen (14, 16) miteinander verbunden sind, **dadurch gekennzeichnet, dass**
- sechs Stützelemente (12) miteinander verbunden werden, um eine verformbare, geschlossene Form zu bilden, wobei jedes Stützelement (12) mit einem Paar Schwenkorganen (14A, 14B) ausgerüstet ist, die sich entlang zweier orthogonaler Richtungen erstrecken,
- der Abstand (L) zwischen den Schwenkorganen (14A, 14B) bei den sechs Stützelementen (12) identisch ist,
- jede Gelenkverbindung (14, 16) zwischen zwei angrenzenden Stützelementen (12) durch die Verbindung der komplementären Schwenkorgane (14A, 16A) gebildet wird.

2. Verbindungsvorrichtung nach Anspruch 1, **dadurch gekennzeichnet, dass** die Stützelemente (12) Zwischenstangen (18) mit identischem Aufbau aufweisen, die jeweils kreisförmige Ausnehmungen umfassen, die im rechten. Winkel an den entgegengesetzten Enden angeordnet sind, um die genannten Schwenkorgane (14A, 14B) zu bilden.

3. Verbindungsvorrichtung nach Anspruch 2, **dadurch gekennzeichnet, dass** ein Gelenkbolzen (20) durch zwei Ausnehmungen geführt ist, die bei der Verbindung zweier angrenzender Zwischenstangen (18) miteinander verbunden werden, um eine der Gelenkverbindungen (14, 16) zu bilden.

4. Verbindungsvorrichtung nach Anspruch 1, **dadurch gekennzeichnet, dass** die Stützelemente (12) von Platten (22) gebildet werden, die nach vorbestimmten Profilen zugeschnitten sind.

5. Verbindungsvorrichtung nach Anspruch 4, **dadurch gekennzeichnet, dass** die Platten (22) dreieckige, ebene Flächen haben.

6. Verbindungsvorrichtung nach Anspruch 1, **dadurch gekennzeichnet, dass** die Stützelemente (12) von polyederförmigen Volumen gebildet werden.

7. Verbindungsvorrichtung nach Anspruch 6, **dadurch gekennzeichnet, dass** die Schwenkorgane (14A) von einem Paar Mitnehmern (34) gebildet werden, die an den Enden einer Kante (36) des Polyeders vorgesehen sind, während die Schwenkorgane (16A) einen zentralen Mitnehmer (38) an einer orthogonalen Kante (40) aufweisen, wobei die Länge des zentralen Mitnehmers (38) im Wesentlichen dem Abstand zwischen den an den Enden angeordneten Mitnehmern (34) entspricht.

8. Verbindungsvorrichtung nach einem der Ansprüche 1 bis 7, **dadurch gekennzeichnet, dass** ein Blockierungselement mit mindestens einer Gelenkverbindung (14, 16) zusammenwirkt, um die Verriegelung der Verbindungsvorrichtung (10) nach der Formgebung der Stützelemente (12) sicherzustellen.

9. Verbindungsvorrichtung nach Anspruch 8, **dadurch gekennzeichnet, dass** die Blockierungsvorrichtung einen Stab (40) umfasst, der unter der Gelenkverbindung (14, 16) zwischen zwei angrenzenden Stützelementen (12) positioniert ist, um die genannte Verriegelung sicherzustellen.

10. Verbindungsvorrichtung nach Anspruch 6, **dadurch gekennzeichnet, dass** die Stützelemente (12) eines Moduls mittels Verbindungsvorrichtungen (72) mit einem angrenzenden Modul verbunden werden können.

11. Verbindungsvorrichtung nach Anspruch 6, **dadurch gekennzeichnet, dass** die polyederförmigen Stützelemente (12A, 12B) auf Befestigungszapfen (74) aufgeschoben werden können, die fest an einem gemeinsamen Gelenk (76) sitzen.

## Claims

1. Articulated assembly device comprising a plurality of support elements (12) joined by articulation links (14, 16),
**characterized in that**:
- six support elements (12) are coupled to one another to form a deformable closed outline, each support element (12) being equipped with a pair of pivoting means (14A, 14B) extending in two orthogonal directions,
- the distance (L) separating the pivoting means (14A, 14B) is identical for the six support elements (12),
- each articulation link (14, 16) between two adjacent support elements (12) is formed by coupling of the complementary pivoting means (14A, 14B).

2. Assembly device according to claim 1, **characterized in that** the support elements (12) comprise rods (18) of identical structures and each comprising circular recesses arranged at right angles at the opposite ends to form said pivoting means (14A, 14B).

3. Assembly device according to claim 2, **characterized in that** an articulation spindle (20) passes through two adjoined recesses when coupling of the two adjacent rods (18) is performed to form one of the articulation links (14, 16).

4. Assembly device according to claim 1, **characterized in that** the support elements (12) are formed by panels (22) cut according to predetermined profiles.

5. Assembly device according to claim 4, **characterized in that** the panels (22) present flat triangular surfaces.

6. Assembly device according to claim 1, **characterized in that** the support elements (12) are formed by volumes in the shape of a polyhedron.

7. Assembly device according to claim 6, **characterized in that** the pivoting means (14A) are formed by a pair of hinge-pins (34) provided at the ends of one edge (36) of the polyhedron, whereas the pivoting means (16A) comprise a central hinge-pin (38) on an orthogonal edge (40), the length of the central hinge-pin (38) corresponding substantially to the distance between the end hinge-pins (34).

8. Assembly device according to one of the claims 1 to 7, **characterized in that** a securing means operates in conjunction with at least one articulation link (14, 16) to perform securing of the assembly device (10) after the support elements (12) have been put in shape.

9. Assembly device according to claim 8, **characterized in that** the securing means comprise a bar (40) positioned under the articulation link (14, 16) between two support elements (12) to perform said securing.

10. Assembly device according to claim 6, **characterized in that** the support elements (12) of one module can be coupled to an adjacent module by joining means (72).

11. Assembly device according to claim 6, **characterized in that** the polyhedron-shaped support elements (12A, 12B) can be fitted onto fixing pins (74) securedly attached to a common hinge (76).
